# FASCICULE DE BREVET EUROPEEN

(11) **EP 0 661 787 B1**
(45) Date de publication et mention de la délivrance du brevet: **22.10.1997**
(21) Numéro de dépôt: 94403018.8
(22) Date de dépôt: 26.12.1994
(51) Int. Cl.: H02B 1/044

(54) **Bouton de commutation à blocage étanche sur son support**
Dichte Schalterklemmbefestigung an einer Unterlage
Tight switch clamping device on a board

(30) Priorité: 29.12.1993 FR 9315810
(43) Date de publication de la demande: 05.07.1995
(73) Titulaire: ALCATEL ALSTHOM COMPAGNIE GENERALE D'ELECTRICITE, 75008 Paris (FR)
(72) Inventeur: Villain, Jean-Christophe, F-75018 Paris (FR)
(74) Mandataire: El Manouni, Josiane

(56) Documents cités:
- DE-U- 9 201 153
- GB-A- 2 199 623
- GB-A- 2 266 186

## Description

La présente invention concerne les boutons de commutation pour dispositifs électroniques et en particulier un bouton de commutation du type comportant une partie mobile destinée à commuter d'une connexion à une autre par rotation et une deuxième partie fixée à un support du dispositif sur lequel est monté le bouton de commutation par un moyen d'assemblage et un moyen de serrage.

Les boutons de commutation sont généralement fixés sur le support du dispositif au moyen d'un emplacement dont la forme épouse la périphérie de la partie fixe du bouton de commutation. Malheureusement, le moindre jeu permis lors du montage et le jeu créé entre la partie fixe du bouton et son logement à la suite des manipulations répétées du bouton de commutation, entraînent un angle de décalage de la partie mobile par rapport à sa position de référence qui peut résulter en une lecture erronée des indications associées au bouton de commutation.

Dans la technique antérieure, on a remédié à ce type d'inconvénient en fixant le bouton de commutation sur le circuit imprimé ou en montant le bouton sur un banc qui le positionne au moment du serrage. Malheureusement, un tel montage ne présente pas l'étanchéité nécessaire lorsque le dispositif électronique sur lequel est monté le bouton est appelé à être utilisé à l'extérieur comme c'est le cas pour un radiotéléphone.

Le but de l'invention est par conséquent de réaliser un bouton de commutation présentant un blocage sur son support qui soit étanche et empêche le moindre jeu rendant les indications du bouton erronées.

L'objet de l'invention est donc un bouton de commutation du type comprenant une première partie mobile destinée à commuter d'une connexion à une autre par rotation et une deuxième partie fixée à un support du dispositif sur lequel est monté le bouton par un moyen d'assemblage et un moyen de serrage. Le moyen d'assemblage comprend deux éléments prismatiques reliés par une bague en deux parties comportant chacune une charnière, et se plaçant entre la deuxième partie du bouton et le support dans un logement du support prévu à cet effet avec le sommet des éléments prismatiques dirigé vers l'intérieur du logement et leurs bases situées à l'extérieur du logement, de telle sorte que le serrage du moyen de serrage permet, en exerçant une force sur les bases des éléments prismatiques, un rapprochement de ceux-ci et un blocage de la partie fixe du bouton sur le support, le rapprochement s'effectuant de façon aisée grâce aux charnières de la bague.

Les buts, objets et caractéristiques seront mieux compris à la lecture de la description suivante faite en référence aux dessins dans lesquels:
la figure 1 représente schématiquement l'angle de décalage entraîné par le jeu entre le bouton de commutation et son support dans la technique antérieure,
la figure 2 montre l'erreur de lecture des indications provoquée par le bouton de commutation de la figure 1,
la figure 3 représente une vue en perspective du moyen d'assemblage du bouton de commutation selon la présente invention,
la figure 4 représente schématiquement une vue en perpective du bouton de commutation utilisant le moyen d'assemblage de la figure 3,
la figure 5 représente une coupe de la bague du moyen d'assemblage de la figure 3 à l'endroit de la charnière,
la figure 6 est une représentation en coupe du moyen d'assemblage de la figure 3 placé dans le support sur lequel est monté le bouton de commutation, et
la figure 7 représente une vue en coupe du bouton de commutation fixé sur son support par le moyen d'assemblage de la figure 3 et après serrage, en l'occurrence par un écrou.

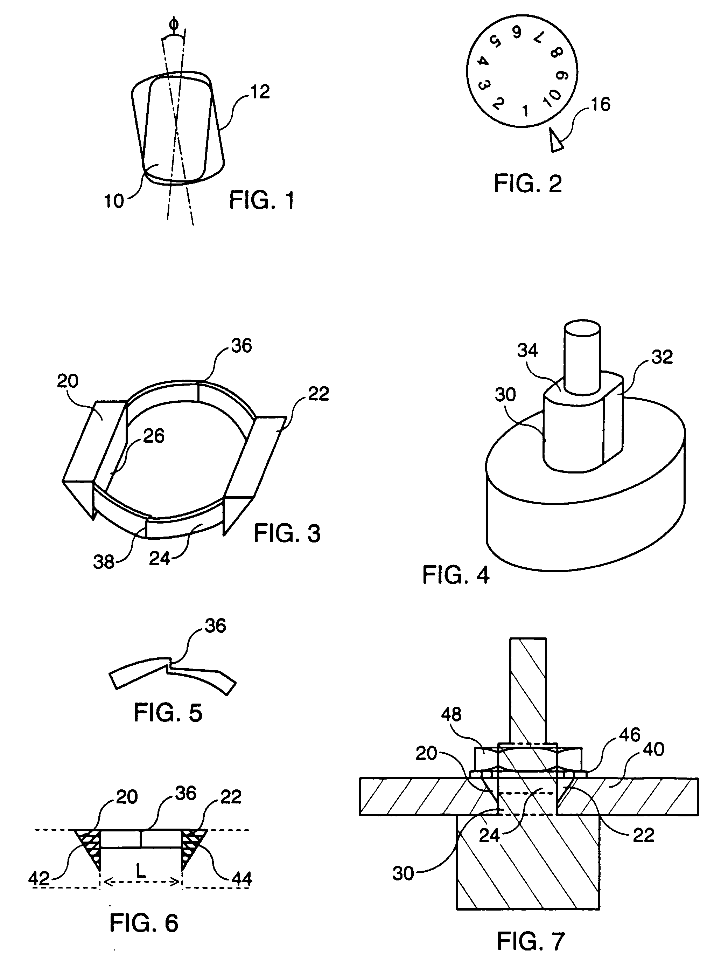

Comme illustré sur la figure 1, l'assemblage d'un bouton de commutation se fait habituellement par insertion de la partie fixe 10 du bouton dans un logement 12 du support ayant la même forme que la partie fixe. Malheureusement, au fur et à mesure des manipulations du bouton, un jeu se crée entre la partie fixe 10 et son logement 12 entraînant un angle de décalage φ entre les axes du bouton et du logement. Cet angle de décalage est tel qu'il s'ajoute à l'angle de rotation dont tourne la partie mobile du bouton de commutation chaque fois que l'on manipule le bouton. Ceci a pour conséquence que le repère ou pointeur 16 se trouve décalé par rapport aux valeurs indiquées par le bouton comme l'illustre la figure 2 où il y a incertitude quant à savoir si la valeur indiquée par le repère est 1 ou 10.

Pour pallier l'inconvénient ci-dessus et assurer une étanchéité nécessaire à des dispositifs tels que des radiotéléphones, le moyen d'assemblage du bouton sur son support est formé tel qu'illustré sur la figure 3. Il comporte deux éléments en forme de prisme reliés par une bague 24. Les faces intérieures des prismes telles que 26 pour le prisme 20 sont parallèles et destinées à venir se placer de chaque coté de la partie fixe 30 du bouton de commutation (représenté schématiquement sur la figure 4) de façon adjacente aux méplats 32 et 34 que comporte cette partie fixe 30. La bague 24 reliant les deux prismes 20 et 22 comporte deux charnières 36 et 38 dont la forme exacte est illustrée sur la figure 5. Grâce à ces deux charnières, les deux prismes peuvent servir à bloquer le bouton de façon efficace et en assurant une bonne étanchéité. En effet, comme le montre la figure 6, le moyen d'assemblage composé des deux prismes 20 et 22 et de sa bague 24 vient se placer dans un logement du support 40 de même forme intérieure que la forme extérieure du moyen d'assemblage. Ainsi, le support comporte deux plans inclinés 42 et 44 sur lesquels viennent se placer respectivement les prismes 20 et 22. Lorsqu'une pression sera exercée sur les bases supérieures des prismes 20 et 22, ceux-ci auront tendance à descendre vers le bas tout en exerçant une pression de plus en plus grande sur les deux méplats 32 et 34 de la partie fixe du bouton de commutation. Lorsque les deux prismes descendent ainsi, la distance 1 qui les sépare tend à diminuer, et bien sûr le diamètre de la bague 24 également. Cette diminution du diamètre de la bague est possible grâce aux charnières 36 et 38. On notera que les charnières correspondent à une diminution substantielle de l'épaisseur de la bague de façon à assurer une déformation aisée de la bague à l'endroit de la charnière

La figure 7 représente de façon schématique le bouton de commutation installé sur le support 40. La partie fixe 30 est bloquée de façon étanche dans le support 40 par les deux prismes 20 et 22 reliés par la bague 24. L'ensemble est fixé par une rondelle 46 et un écrou 48. Au fur et à mesure que l'écrou 48 est serré, la rondelle 46 exerce une force sur la base supérieure des prismes 20 et 22 qui tend à les faire descendre vers le bas en exerçant une pression de plus en plus forte sur les méplats de la partie fixe 30, la diminution du diamètre de la bague 24 étant encaissé par les charnières comme on l'a vu précédemment.

Du fait que les prismes 20 et 22 exercent une pression très forte sur la partie fixe 30 ou réciproquement, ces prismes doivent être constitués d'une matière plastique à même de subir une légère déformation lorsqu'elle est soumise à une forte pression. Le polypropylène est utilisé de préférence pour constituer les prismes et même l'ensemble avec la bague et ses charnières.

## Revendications

1. Bouton de commutation du type comprenant une première partie mobile destinée à commuter d'une connexion à une autre par rotation et une deuxième partie fixée à un support du dispositif sur lequel est monté ledit bouton par un moyen d'assemblage et un moyen de serrage (46); ledit bouton étant caractérisé en ce que ledit moyen d'assemblage comprend deux éléments prismatiques (20, 22) reliés par une bague (24) en deux parties comportant chacune une charnière (36, 38), ledit moyen d'assemblage se plaçant entre ladite deuxième partie (30) et ledit support (40) dans un logement dudit support prévu à cet effet avec le sommet desdits éléments prismatiques dirigé vers l'intérieur dudit logement et leurs bases situées à l'extérieur dudit logement, de telle sorte que le serrage dudit moyen de serrage permet, en exerçant une force sur les bases des éléments prismatiques, un rapprochement desdits éléments et un blocage de ladite deuxième partie sur le support, le rapprochement s'effectuant de façon aisée grâce aux charnières de ladite bague.

2. Bouton de commutation selon la revendication 1 dans lequel lesdites charnières (36, 38) de ladite bague (24) sont formées par un changement de forme et une diminution d'épaisseur de ladite bague.

3. Bouton de commutation selon la revendication 1 ou 2, dans lequel lesdits éléments prismatiques (20, 22) sont en matière plastique.

4. Bouton de commutation selon la revendication 3, dans lequel lesdits éléments prismatiques sont en polypropylène.

5. Bouton de commutation selon l'une quelconque des revendications précédentes utilisé pour un dispositif radiotéléphone.

## Patentansprüche

1. Drehschalter mit einem ersten beweglichen Teil, durch dessen Drehung von einer Verbindung auf eine andere umgeschaltet wird, und mit einem zweiten Teil, das auf einem Träger der Vorrichtung befestigt ist, auf der der Drehschalter mit Hilfe eines Montagemittels und eines Spannmittels (46) montiert ist, dadurch gekennzeichnet, daß das Montagemittel zwei prismatische Elemente (20, 22) enthält, die über einen Ring (24) aus zwei Teilen mit je einem Scharnier (36, 38) miteinander verbunden sind, wobei das Montagemittel zwischen dem zweiten Teil (30) und dem Träger (40) in einem hierzu vorgesehenen Sitz des Trägers so liegt, daß die Spitzen der prismatischen Elemente zur Innenseite des Sitzes weisen und ihre Basis außerhalb des Sitzes liegt, damit beim Anziehen der Spannmittel eine Kraft auf die Basis der prismatischen Elemente, eine gegenseitige Annäherung dieser Elemente und eine Blockierung des zweiten Teils auf dem Träger bewirkt wird, wobei diese Annäherung ohne Schwierigkeiten aufgrund von Scharnieren in den Ring erfolgt.

2. Drehschalter nach Anspruch 1, bei dem die Scharniere (36, 38) des Rings (24) durch eine Formänderung und eine Verringerung der Dicke des Rings gebildet werden.

3. Drehschalter nach Anspruch 1 oder 2, bei dem die prismatischen Elemente (20, 22) aus Kunststoff sind.

4. Drehschalter nach Anspruch 3, bei dem die prismatischen Elemente aus Polypropylen sind.

5. Drehschalter nach einem beliebigen der vorhergehenden Ansprüche in Verwendung bei einem Mobiltelefon.

## Claims

1. Switch knob of the type having a mobile first part adapted to switch from one connection to another by rotation and a second part fixed to a support of the device on which said knob is mounted by assembly means and clamping means (46); said knob being characterised in that said assembly means comprise two prism shape members (20, 22) linked by a ring (24) in two parts each including a hinge (36, 38), said assembly means being disposed between said second part (30) and said support (40) in a housing of said support provided for this purpose with the top of said prism-shape members facing towards the interior of said housing and their bases outside said housing so that clamping of said clamping means, by applying a force to the bases of the prism-shape members, moves said members towards each other and locks said second part to the support, the movement towards each other being facilitated by the hinges of said ring.

2. Switch knob according to claim 1 wherein said hinges (36, 38) of said ring (24) are formed by a change of shape and a reduction in the thickness of said ring.

3. Switch knob according to claim 1 or claim 2 wherein said prism-shape members (20, 22) are made from plastics material.

4. Switch knob according to claim 3 wherein said prism-shape members are made from polypropylene.

5. Switch knob according to any one of the preceding claims used in a mobile telephone.
